(19) Europäisches Patentamt

European Patent Office

Office européen des brevets

(11) **EP 1 070 007 B1**

(12) **EUROPÄISCHE PATENTSCHRIFT**

(45) Veröffentlichungstag und Bekanntmachung des Hinweises auf die Patenterteilung:
**29.10.2003 Patentblatt 2003/44**

(51) Int Cl.$^7$: **B60T 8/00**

(86) Internationale Anmeldenummer:
**PCT/EP99/02067**

(21) Anmeldenummer: **99914543.6**

(22) Anmeldetag: **26.03.1999**

(87) Internationale Veröffentlichungsnummer:
**WO 99/050113 (07.10.1999 Gazette 1999/40)**

(54) **VERFAHREN UND VORRICHTUNG ZUM ERMITTELN VON KORREKTURWERTEN FÜR RADGESCHWINDIGKEITEN**

METHOD AND DEVICE FOR DETERMINING CORRECTION VALUES FOR WHEEL SPEEDS

PROCEDE ET DISPOSITIF POUR DETERMINER DES VALEURS DE CORRECTION POUR DES VITESSES DE ROUE

(84) Benannte Vertragsstaaten:
**DE FR GB**

(30) Priorität: **31.03.1998 DE 19814206**
**20.07.1998 DE 19832483**

(43) Veröffentlichungstag der Anmeldung:
**24.01.2001 Patentblatt 2001/04**

(73) Patentinhaber: **Continental Teves AG & Co. oHG**
**60488 Frankfurt (DE)**

(72) Erfinder:
• **GRONAU, Ralph**
**D-35083 Wetter (DE)**
• **STILLER, Alexander**
**D-30823 Garbsen (DE)**

(56) Entgegenhaltungen:
**EP-A- 0 508 146**     **EP-A- 0 855 597**
**US-A- 5 682 333**

## Beschreibung

Die Erfindung betrifft ein Verfahren und eine Vorrichtung zum Ermitteln von Korrekturwerten für die Radgeschwindigkeiten eines Fahrzeugs gemäß den Oberbegriffen der unabhängigen Ansprüche. Ein solches Verfahren und eine solche Vorrichtung sind aus der DE-4 424 18 C2 bekannt.

Radgeschwindigkeiten werden üblicherweise mittels Radsensoren gemessen. Ihrer Konstruktion nach sind diese Radsensoren üblicherweise so, daß sie Winkelgeschwindigkeiten messen, beispielsweise indem sie das Vorbeiziehen von Markierungen, die sich mit dem Rad mitbewegen, an einem Sensor überwachen. Dadurch wird beispielsweise eine Impulsfolge gewonnen, deren Frequenz mit der Raddrehgeschwindigkeit steigt.

Die Radgeschwindigkeit, in der technischen Literatur auch als Radumfangsgeschwindigkeit bezeichnet, ist mit der Dreh- bzw. Winkelgeschwindigkeit des Rades über den Zusammenhang $v = \omega \cdot r$ verknüpft sind, wobei v die Radgeschwindigkeit ist (genauer die Radumfangsgeschwindigkeit), $\omega$ die Winkelgeschwindigkeit des Rades und r der Reifenradius. Damit geht der Reifenradius in die Berechnung der Radgeschwindigkeit ein. Der Reifenradius kann z.B. aus Herstellerangaben ermittelt werden, indem ein mittlerer Wert verwendet wird, der innerhalb der herstellungsbedingten Toleranzen liegt.

Da die Reifenradien an den einzelnen Rädern eines Fahrzeugs unterschiedlich sein können, beispielsweise aufgrund von Abnutzung, herstellungsbedingten Toleranzen, Montage von Reifen von unterschiedlichen Herstellern etc., und die exakten Werte der Radien nicht bekannt sind, kann aus der unmittelbar gemessenen (und ggf. gefilterte) Winkelgeschwindigkeit des betrachteten Rades nur näherungsweise die Radgeschwindigkeit berechnet werden.

Bei vergleichsweise genauen Schlupf-und Stabilitätsregelungen, aber auch für Fahrzustandserkennungsalgorithmen, bei denen z.B. der Radschlupf oder die Radgeschwindigkeitsdifferenzen, usw. verwendet werden, ist es daher erforderlich, den störenden Einfluß der unterschiedlichen Reifenradien zu eliminieren. Demnach sind für jedes Rad Korrekturwerte zu ermitteln, mit denen die entsprechende Radgeschwindigkeit korrigiert werden kann, da die Radgeschwindigkeiten meist unter der Annahme von Rädern mit exakt denselben Reifenradien bestimmt werden.

Aus der DE 4 424 318 C2 ist ein Antriebsschlupfregelsystem bekannt, in dem Bedingungen für die Ermittlung von Korrekturfaktoren festgelegt sind. Die Fahrzeugseiten (links bzw. rechts) werden getrennt betrachtet. Eine Reifentoleranzberechnung wird zugelassen, wenn bestimmte Bedingungen einerseits hinsichtlich des Drosselklappenwinkels und andererseits hinsichtlich des Verhältnisses der Geschwindigkeiten der Räder von angetriebener und nicht angetriebener Achse an einer betrachteten Fahrzeugseite erfüllt sind.

Dieses Verfahren hat den Nachteil, daß aufgrund des Vergleichs der nicht korrigierten Radgeschwindigkeiten die Abgleichsbedingungen bei einem stark abweichenden Rad sehr häufig erfüllt sind, wodurch die Genauigkeit eines nachgeschalteten Abgleichverfahrens sehr beeinträchtigt wird. Desweiteren werden keine Kriterien für den Abgleich der Radgeschwindigkeiten der linken Fahrzeugseite zur rechten Fahrzeugseite angegeben.

Aus der DE 3 718 421 ist ein Verfahren zur Kurvenfahrterkennung und zur Ermittlung eines Korrekturfaktors bekannt, mit dem das Verhältnis der Reifenradien der nicht angetriebenen Achse ermittelt wird. Das Verfahren geht von der Annahme aus, daß der von der Kurvenfahrt abhängige Einfluß auf die Ermittlung über eine Langzeitfilterung von 30 bis 40 s eliminiert werden kann. Diese Annahme ist jedoch bei kurvigem Streckenverlauf nicht gerechtfertigt, so daß entweder ungenaue Ergebnisse ermittelt oder wesentlich höhere Zeitkonstanten für die Filterung gewählt werden müßten, was zu sehr langen Lernzeiten führen würde.

Aus der US 5 682 333 ist ein Verfahren zum Abgleich der Raddrehzahlen für ein Kraftfahrzeug bekannt geworden, bei dem Skalierungsfaktoren für die Räder bestimmt werden, um einander angeglichene korrigierte Raddrehzahlen zu ermitteln. Bei dem Verfahren wird in einem ersten Schritt mittels eines schnellen Grobabgleichs eine grobstufige Skalierungsfaktorbestimmung durchgeführt, wenn fehlende Kurvenfahrt, eine bestimmte Mindestgeschwindigkeit und eine höchstens geringe Fahrzeugbeschleunigung erkannt wird. Anschließend wird durch einen Feinabgleich ein feinstufiger Skalierungsfaktor bestimmt, wobei entweder jedes Rad einer Achse zum jeweils seitengleichen Rad der anderen Achse, wenn ein höchstens geringes Antriebsmoment und das Überschreiten einer Mindestgeschwindigkeit erkannt sind, oder jedes Rad der einer Seite zum jeweils gegenüberliegenden, achsgleichen Rad, wenn ein größeres Antriebsmoment, eine höchstens mäßige Kurvenfahrt und das Überschreiten einer Mindestgeschwindigkeit erkannt sind, abgeglichen wird.

Aufgabe der Erfindung ist es, ein Verfahren und eine Vorrichtung zum Ermitteln von Korrekturwerten für die Radgeschwindigkeiten eines Fahrzeugs anzugeben, die eine schnelle, zuverlässige und sehr genaue Korrekturwertermittlung für alle Räder des Fahrzeugs erlauben.

Diese Aufgabe wird mit den Merkmalen der unabhängigen Ansprüche 1 und 23 gelöst. Abhängige Ansprüche sind auf bevorzugte Ausführungsformen der Erfindung gerichtet.

Da in modernen Schlupfregelfunktionen häufig achsweise bzw. seitenweise Vergleiche von Radgeschwindigkeiten stattfinden, ist es wichtig, daß die Radgeschwindigkeitswerte achsweise (an der Vorderachse bzw. an der Hinterachse) und seitenweise (rechte Seite, linke Seite) vergleichbar sind. Dies führt letztendlich zu der Forderung, daß alle Radgeschwindigkeiten des Fahrzeugs paarweise miteinander vergleichbar sein müssen, so daß ein entsprechender Satz von Korrekturfaktoren zu ermitteln ist. Wenn der absolute Wert der Radgeschwindigkeiten nicht sehr genau bestimmt werden muß, kann es ausreichend sein, einen Korrekturfaktor zu wählen (vorzugsweise einen "runden" Wert) und bezugnehmend darauf die Korrekturwerte für die übrigen Räder zu bestimmen.

Zunächst werden Einzelabgleiche für zumindest eine Fahrzeugseite (die linken Räder bzw. die rechten Räder) und für zumindest eine Fahrzeugachse (die Räder an der Vorderachse bzw. die Räder an der Hinterachse) vorgenommen. Ausgehend von diesen Einzelabgleichen wird dann der Gesamtabgleich zur Ermittlung der genannten Korrekturwerte vorgenommen.

Vorzugsweise erfolgen Einzelabgleiche für die linke Seite und die rechte Seite des Fahrzeugs, sowie für die nicht angetriebene Fahrzeugachse (oder als die nicht angetrieben angesehene Fahrzeugachse). Nach Vornahme dieser Abgleiche wird der gesamte Satz von Korrekturwerten für alle Räder des Fahrzeugs ermittelt. Der Abgleich für eine Fahrzeugseite und für eine Fahrzeugachse erfolgt durch Auswertung der für die Räder an dieser Seite bzw. an dieser Achse gemessenen Radgeschwindigkeiten. Die Auswertung kann in Echtzeit geschehen (die momentan gemessenen Werte werden sofort verarbeitet) oder bezugnehmend auf zwischengespeicherte Werte.

Vorzugsweise erfolgt die Auswertung dann, wenn für die Auswertung der Radgeschwindigkeiten der Räder der betrachteten Gruppe günstige Bedingungen vorliegen (Echtzeit), oder zumindest werden dann Daten für die spätere Auswertung gespeichert.

Bezugnehmend auf die Zeichnungen werden nachfolgend einzelne Ausführungsformen der Erfindung beschrieben, es zeigen:

Fig. 1 schematisch ein Fahrzeug, in dem die Erfindung angewendet werden kann,

Fig. 2 schematisch eine erfindungsgemäße Vorrichtung zum Ermitteln von Korrekturwerten,

Fig. 3 nach Art eines Flußdiagramms ein erfindungsgemäßes Verfahren zum ermitteln von Korrekturwerten,

Fig. 4 eine Ausführungsform einer Zustandserkennungseinrichtung,

Fig. 5 eine Ausführungsform einer Logik für die Erkennung der Geradeausfahrt,

Fig. 6 eine Ausführungsform einer Korrekturwertermittlungseinrichtung,

Fig. 7 eine Ausführungsform einer Einrichtung zur Vornahme des Querabgleichs.

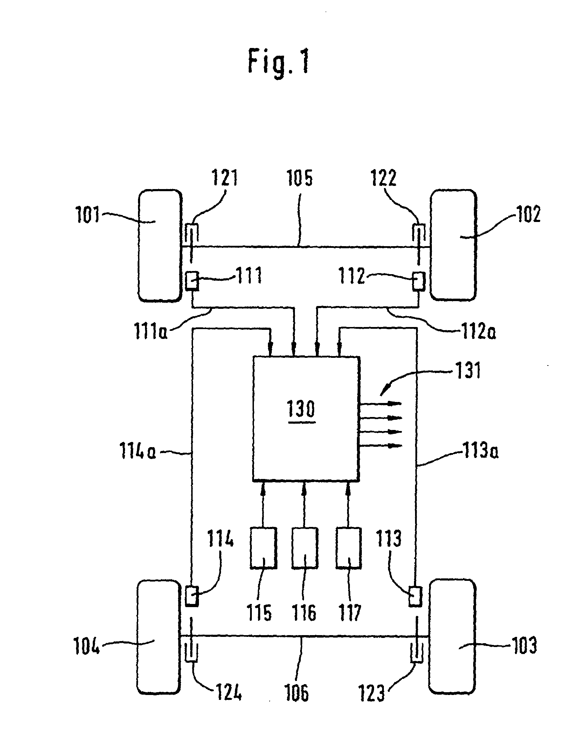

Fig. 1 zeigt schematisch ein Fahrzeug mit vier Rädern 101 - 104. Die Räder 101 und 102 befinden sich an der Vorderachse 105, die Räder 103 und 104 an der Hinterachse 106. Jedes Rad weist Radbremsen 121 - 124 auf. Außerdem sind radindividuell Radsensoren 111 - 114 vorgesehen, die über Signalleitungen 111a - 114a jeweils Signale an eine Vorrichtung 130 liefern, wobei die Signale ein Maß für die gemessenen Drehgeschwindigkeiten der einzelnen Räder sind. Die Vorrichtung 130 kann eine Steuerung bzw. Regelung im weitesten Sinne sein, die auch nach Maßgabe weiterer Sensoren 115 - 117 Ausgangssignale 131 erzeugt, mit denen insbesondere die Bremsen 121 - 124 der einzelnen Räder angesprochen und vorteilhaft beeinflußt werden können. Ebenso können weitere Stellglieder von Schlupfregelfunktionen, wie Drosselklappe, Zündwinkelverstellung- oder ausblendung oder weitere Abnehmer der korrigierten Radgeschwindigkeiten vorteilhaft beeinflußt werden. Die auf den Signalleitungen 111a - 114a einlaufenden Radsignale sind unter anderem durch den Radius des jeweiligen Rades beeinflußt, wie dies anfangs erläutert wurde.

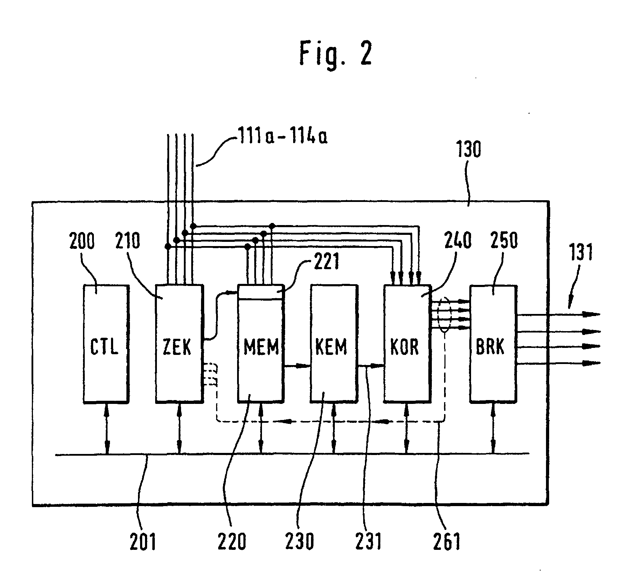

Dementsprechend ist in der Vorrichtung 130 eine Vorrichtung zum Ermitteln von Korrekturwerten für diese Signale vorgesehen, sowie eine Vorrichtung zum Korrigieren der Signale nach Maßgabe der ermittelten Korrekturwerte. In Fig. 2 ist dies deutlicher dargestellt.

Fig. 2 ist als funktionales Blockdiagramm zu verstehen. Gleiche Komponenten wie in Fig. 1 haben gleiche Bezugszeichen. Die Vorrichtung 130 weist eine allgemeine Steuerung 200 auf, eine Zustandserkennung 210, einen Speicher 220, eine Korrekturfaktorermittlung 230, eine Korrektureinrichtung 240 und eine allgemeine Bremsensteuerung bzw. -regelung 250 auf. Zur Vornahme allgemeiner Steuerungsvorgänge sind die genannten Komponenten über einen Kanal 201 miteinander verbunden, so daß die für den Betrieb bzw. Ablauf notwendigen Informationen ausgetauscht werden können.

Die Wirkungsweise der genannten Komponenten wird nachfolgend erläutert. Die Signale 111a - 114a der einzelnen Radsensoren 111 - 114 werden allgemein in der Vorrichtung 130 empfangen und können dort ggf. selektiv im Speicher 220 gespeichert werden. Die Selektion kann durch die Zustandserkennung 210 oder durch geeignete Zusatzsensorik gesteuert werden, die ebenfalls auf die Signale 111a - 114a Bezug nimmt. Schematisch durch gestrichelte Linie 261 angedeutet ist eine Option, wonach die Zustandserkennung 210 auch (ggf. auch nur) auf die korrigierten Radsignale Bezug nimmt, wie sie von der Korrektureinrichtung 240 ausgegeben werden. In der Korrekturwertermittlung werden die Korrekturwerte wie weiter oben prinzipiell und weiter unten ausführlicher dargelegt ermittelt. Sie werden dann der Korrektureinrichtung 240 eingegeben, die nach Maßgabe dieser Korrekturwerte die Radsignale 111a - 114a korrigiert und an alle Regel- und Steuereinrichtungen (z.B Bremsensteuerung 250) weiterleitet, die korrigierte Radgeschwindigkeiten benötigen. Die Vorrichtung zum Ermitteln der Korrekturwerte weist demnach insbesondere die Korrekturwertermittlungseinrichtung 230, ggf. zusammen mit Speicher 220 und Zustandserkennung 210 auf.

Die Ermittlung der Korrekturwerte basiert auf einer gruppenweisen Auswertung der gemessenen Radgeschwindigkeiten. Als Gruppen werden die Radgeschwindigkeitswerte an einer Fahrzeugseite (beispielsweise am Rad vorne links und am Rad hinten links bzw. am Rad vorne rechts und am Rad hinten rechts) genommen bzw. die Radgeschwindigkeitswerte an einer Achse (beispielsweise hinten links und hinten rechts). Die Auswertung innerhalb einer Gruppe, auch als "Abgleich" angesprochen, kann beispielsweise die Quotientenbildung, die Differenzbildung oder ein Vergleich sein, wobei hierfür jeweils die Werte des einen Rades der Gruppe und des anderen Rades der Gruppe herangezogen werden. Der Längsabgleich umfaßt damit die gruppenweise Auswertung der Radgeschwindigkeitswerte einer Fahrzeugseite (beispielsweise Längsabgleich links: die gruppenweise Auswertung der Radgeschwindigkeiten der Räder der linken Fahrzeugseite; Querabgleich der nicht angetriebenen Achse: die gruppenweise Auswertung der Radgeschwindigkeiten der Räder an der nicht angetriebenen Fahrzeugachse oder an der als nicht angetrieben angesehenen Achse).

Zur Klarstellung sei angemerkt, daß unter "Radsignalen" hier schon insoweit aufbereitete Signale verstanden werden, als diese Signale die Radgeschwindigkeit kennzeichnen (vorzugsweise als digitalen Wert). Die Radsignale auf den Leitungen 111a - 114a sind nicht als Impulsfolgen anzusehen. Wenn die Radsensoren 111 - 114 lediglich Impulsfolgen ausgeben, wäre in der Vorrichtung 130 noch eine Verarbeitung vorzusehen, die aus diesen Impulsfolgen die benötigten Geschwindigkeitsdaten ermittelt.

Fig. 2 zeigt eine Ausführungsform, bei der die für die Auswertung herangezogenen Geschwindigkeitswerte im Speicher 220 zwischengespeichert werden und ihm von der Korrekturwertermittlung 230 gleich oder später entnommen werden. Die Einspeicherung der Radgeschwindigkeiten 111a - 114a erfolgt vorzugsweise selektiv insoweit, als für die Auswertung einer Gruppe jeweils solche Daten herangezogen werden, die zu solchen Zeitpunkten bzw. Fahrzuständen gewonnen wurden, die für die betrachtete Gruppe günstige Werte liefern. Diese Zeitpunkte bzw. Fahrsituationen können durch die Zustandserkennungseinrichtung 210 erkannt werden. Die Zustandserkennungseinrichtung 210 nimmt auf die Radgeschwindigkeitswerte 111a - 114a (und/oder auf die bereits korrigierten Werte 261) Bezug und gibt die Einspeicherung der jeweils betrachteten Daten über ein schematisch gezeichnetes Gatter 221 frei bzw. sperrt sie.

Damit ist sichergestellt, daß die Korrekturwertermittlung 230 jeweils auf solche Radgeschwindigkeitswerte Bezug nimmt, die zu "günstigen" Zeitpunkten gewonnen wurden. Was unter "günstigen" Zeitpunkten zu verstehen ist, wird weiter unten erläutert.

Die gruppenweise Auswertung der Radgeschwindigkeiten erfolgt vorzugsweise für die Räder der linken Fahrzeugseite, die Räder der rechten Fahrzeugseite und die Räder der nicht angetriebenen (oder als nicht angetrieben angesehenen) Achse. Aus diesen drei gruppenweisen Auswertungen ergeben sich drei Beziehungen. Wenn weiterhin einer der Korrekturfaktoren gewählt wird (beispielsweise zu 1), können die übrigen drei Korrekturfaktoren aus den drei Einzelabgleichen (gruppenweisen Auswertungen) bestimmt werden. Die Korrekturwertermittlung 230 schreibt die ermittelten Korrekturwerte in die Korrektureinrichtung 240 ein bzw. überschreibt alte Korrekturwerte, so daß die (neuen) Korrekturwerte für die Korrektur der Radgeschwindigkeiten 111a - 114a verwendet werden können.

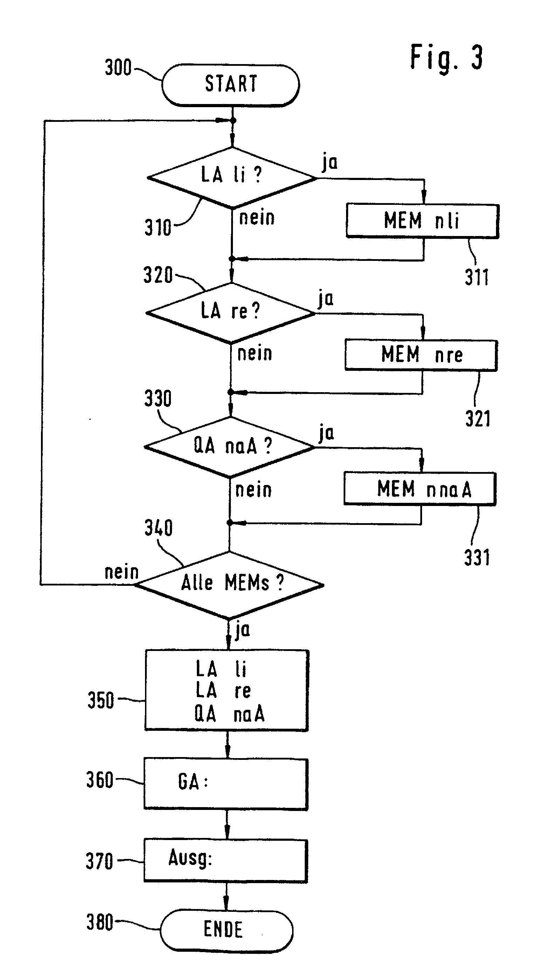

Bezugnehmend auf Fig. 3 wird das erfindungsgemäße Verfahren prinzipiell erläutert. Es beginnt mit dem Startschritt 300. Das Verfahren kann nach Maßgabe bestimmter Bedingungen ausgelöst werden, beispielsweise Ablauf einer bestimmten Zeitdauer, Anlassen des Fahrzeugs, Vornahme von Wartungsarbeiten o.ä. Es schließen sich dann Abfragen 310 - 330 an. Die gezeigte Reihenfolge ist als Ausführungsbeispiel zu verstehen, sie kann auch anders als dargestellt sein, z. B. können die Schritte 310-330 parallel ausgeführt sein. In 310 wird überprüft, ob für den Längsabgleich für die linke Fahrzeugseite ein günstiger Zustand vorliegt. Sofern dies der Fall ist, werden die benötigten Raddaten eingespeichert (im Speicher 220), siehe Schritt 311. Im Schritt 320 wird überprüft, ob für den Längsabgleich für die rechte Seite günstige Bedingungen vorliegen. Ist dies der Fall, werden die benötigten Daten in den Speicher eingeschrieben, siehe Schritt 321. In Schritt 330 wird überprüft, ob die Raddatenspeicherung für den Querabgleich der nicht angetriebenen (oder als nicht angetrieben angesehenen) Achse noch notwendig ist und ob hierfür günstige Bedingungen vorliegen. Ist dies der Fall, werden die benötigten Daten gespeichert (Schritt 331). Wenn die Aktualisierung und Einspeicherung notwendiger Daten für die einzelnen Abgleiche festgestellt wird, wird zum Schritt 350 gegangen. Dort werden die einzelnen Abgleiche (Längsabgleich links, Längsabgleich rechts und Querabgleich der nicht angetriebenen oder der als nicht angetrieben angesehenen Achse) vorgenommen. Bezugnehmend auf die dann ermittelten Ergebnisse wird der Gesamtabgleich zur Ermittlung aller Korrekturfaktoren in Schritt 360 vorgenommen. In Schritt 370 werden die ermittelten Korrekturwerte ausgegeben (in Fig. 2 beispielsweise von Einrichtung 230 nach Einrichtung 240).Ein permanentes Durchlaufen des Algorithmus ist vorteilhaft, da Änderungen jederzeit ermöglicht werden müssen, da Radienänderungen zu keinem Zeitpunkt auszuschließen sind (z. B. Montage eines Notrades ohne Unterbrechung des Zündungslaufs).

In der beschriebenen Ausführungsform werden die einzelnen Abgleiche also nicht unmittelbar dann vorgenommen werden, wenn für diesen Abgleich günstige Bedingungen vorliegen. Vielmehr werden dann die vorliegenden Daten zwischengespeichert, wobei der Abgleich später stattfinden kann. In einer anderen, im Flußdiagramm der Fig. 3 nicht gezeigten Möglichkeit können die bei den günstigen Bedingungen ermittelten Daten unmittelbar zur Vornahme des Abgleichs verwendet werden. Der Abgleich erfolgt dann zu dem Zeitpunkt, zu dem die Daten tatsächlich ermittelt werden. Eine Zwischenspeicherung der Daten kann dann entfallen.

Nachfolgend werden die gruppenweisen Auswertungen bzw. die einzelnen Abgleiche sowie die Ermittlung der günstigen Bedingungen hierfür beschrieben.

Allgemein gesprochen liegen günstige Verhältnisse für die Räder einer Gruppe dann vor, wenn zwischen den Rädern dieser Gruppe keine Geschwindigkeitsunterschiede z.B. aufgrund von (unterschiedlichem) Schlupf oder aufgrund von geometrischen Verhältnissen die bei Kurvenfahrt auftreten können, denn dann kann davon ausgegangen werden, daß festgestellte Geschwindigkeitsverhältnisse innerhalb einer Gruppe tatsächlich auf die momentanen Reifenradien zurückzuführen sind und nicht auf transiente Störungen. Für den Querabgleich (gruppenweise Auswertung für die Radgeschwindigkeiten der Räder einer Achse) bedeutet dies, daß keine Kurve gefahren werden sollte, weil dann schon aufgrund der unterschiedlichen Kurvenradien für Kurveninneres und Kurvenäußeres Rad Geschwindigkeitsunterschiede auftreten. Darüber hinaus ergeben sich aufgrund anderer fahrdynamischer Effekte Geschwindigkeitsunterschiede, die nicht auf die unterschiedlichen Reifengrößen zurückzuführen sind. Demnach wäre für den Querabgleich die Kurvenfahrt ein Ausschlußkriterium. Vorteilhafterweise werden nur stabil und schwingungsfrei laufende Radgeschwindigkeiten ausgewertet bzw. zum Abgleich herangezogen. Für den Längsabgleich ist sicherzustellen, daß an der angetriebenen Achse z.B. kein Antriebsoder Schleppschlupf als Reifenabweichung interpretiert wird, sowie keine Kurvenfahrt vorliegt

Erfindungsgemäß ist vorgesehen, jeweils die genannten Bedingungen, wie sie für eine Gruppe aufzustellen sind, für sich alleine abzufragen und dann für diese Gruppe den Abgleich vorzunehmen bzw. die dann gewonnenen Daten zu speichern, um den Abgleich gegebenenfalls später anhand der gespeicherten Daten vornehmen zu können. Dies hat den Vorteil, daß die relevanten Daten früher gesammelt werden können, da weniger Bedingungen gleichzeitig zutreffen müssen, um die gruppenweise Auswertung für eine Gruppe (bzw. die Datenspeicherung hierfür) zuzulassen.

Die Erkennung der günstigen Bedingungen kann bezugnehmend auf die gemessenen Radgeschwindigkeiten und/oder bezugnehmend auf die (nach Maßgabe alter Korrekturwerte) korrigierten Radgeschwindigkeiten erfolgen (siehe angedeutete Signalführung 261 in Fig. 2). Die Korrekturwertermittlung selbst in Einrichtung 230 erfolgt jedoch bezugnehmend auf die gemessenen Radgeschwindigkeiten 111a bis 114a, die in Fig. 2 in den Speicher 220 eingespeichert werden. So können Bedingungen für den Querabgleich (vorzugsweise an der nicht angetriebenen oder als nicht angetrieben angesehenen Achse) unabhängig von Bedingungen für den Längsabgleich links und unabhängig von Bedingungen für den Längsabgleich rechts überprüft werden.

Die Bedingung für den rechten Längsabgleich kann lauten:

Vknr > Vkar,

wenn das Antriebsmoment am angetriebenen Rad der rechten Seite positiv ist, und

Vknr < Vkar,

wenn das Antriebsmoment am rechten angetriebenen Rad negativ ist, wobei V die Radgeschwindigkeiten bezeichnet, k auf den korrigierten Wert (über Leitung 261 in Fig. 2) hinweist, n auf den Wert an einer nicht angetriebenen Achse, a auf den Wert an einer angetriebenen Achse und r auf die Räder der rechten Fahrzeugseite. Für Fahrzeuge, bei denen keine Motormomenteninformation zur Verfügung steht, kann ersatzweise auch die Fahrzeugbeschleunigung bzw. - Verzögerung verwendet werden. Für die linke Seite gelten sinngemäß die gleichen Bedingungen, wobei in der Benennung der Größen in den Indizes r durch 1 zu ersetzen wäre. Durch die Gestaltung der Abfrage kann sichergestellt werden, daß Antriebsschlupf bzw. Schleppschlupf an der angetriebenen (oder der als angetrieben angesehenen) Achse geringer ist, als der durch unterschiedliche Radien erzeugte Geschwindigkeitsunterschied, so daß Geschwindigkeitsunterschiede tatsächlich auf unterschiedliche Reifenradien zurückgeführt werden können und die dann erfolgte Auswertung tatsächlich zu Korrekturwerten führt, die lediglich die unterschiedlichen Reifenradien widerspiegeln und keine sonstigen transienten Störgrößen.

Wenn beispielsweise eine günstige Bedingung für den Längsabgleich links erkannt wurde (Abfrage 310 in Fig. 3), können die dann vorliegenden Geschwindigkeitswerte oder Geschwindigkeitsverhältnisse des Rades 101 und des Rades 104 im Speicher 220 eingespeichert werden (Schritt 311 in Fig. 3). Es kann auch sofort die Auswertung dieser Gruppe von Radgeschwindigkeiten erfolgen.

Der Längsabgleich für die Räder einer Seite kann wie folgt vorgenommen werden. Ausgegangen wird immer noch vom Beispiel der linken Fahrzeugseite: Es werden vorläufige Korrekturwerte DVP1 und DVP4 für Rad 101 und Rad 104 ermittelt. Dabei wird zunächst für ein Rad, vorzugsweise das langsamer drehende, ein vorläufiger Korrekturwert gewählt. Daraus und aus dem Verhältnis der Radgeschwindigkeiten wird dann für das andere Rad ein vorläufiger Korrekturwert berechnet. Nimmt man beispielsweise an, daß Rad 104 langsamer dreht als Rad 101, gilt:

für Vs4 < Vs1:
Kv4 = C

$$Kv1 = Kv4 \times Vs1/Vs4,$$

wobei Vs1 bzw. Vs4 die sich anhand der Radsensorwerte 111 und 114 ergebenden Raddrehgeschwindigkeiten der Räder 101 bzw. 104 sind, und Kv1 und Kv4 vorläufige Korrekturwerte für die Radgeschwindigkeiten des Rads 101 bzw. des Rads 104.

Wenn die vorläufigen Korrekturwerte sofort berechnet werden (ggf. ohne Zwischenspeicherung in Speicher 220 in Fig. 2), können die Größen Kv1 und Kv4 mit Hilfe eines Tiefpaßfilters (vorzugsweise erster Ordnung mit begrenzter Änderungsgeschwindigkeit) gefiltert werden, um weiter transiente Störungen ausschließen zu können.

Die vorläufigen Korrekturwerte Kv2 und Kv3 für die Räder der rechten Seite werden entsprechend berechnet. Es entstehen dadurch zwei Sätze von vorläufigen Korrekturfaktoren, mit denen die Radgeschwindigkeiten einer Fahrzeugseite so korrigiert werden können, daß die Radgeschwindigkeiten seitenweise miteinander vergleichbar werden. Um alle Räder des Fahrzeugs paarweise miteinander vergleichbar zu machen, ist ein weiterer Abgleich notwendig, insbesondere ein Querabgleich vorzugsweise an der nicht angetriebenen (oder der als nicht angetrieben angesehenen) Achse. Auch hierfür ist zunächst ein günstiger Zeitpunkt bzw. eine günstige Fahrsituation zu ermitteln. Ausgeschlossen werden sollten Kurvenfahrten, da aufgrund der Fahrzeuggeometrie die kurvenäußeren Räder auf einem größeren Kreisradius laufen, als die kurveninneren Räder. Aufgrund der größeren zurückzulegenden Wegstrecke weisen die äußeren Räder eine größere Radgeschwindigkeit auf. Um eine Geradeausfahrt zu erkennen, kann man sich empirisch gewonnene Erkenntnisse zunutze machen:

- Statistisch tritt die Geradeausfahrt häufiger auf, als eine Fahrt mit Streckenabschnitten, die dadurch gekennzeichnet sind, daß sie einen gleichbleibenden Kurvenradius haben und exakt derselbe Kurvenradius mehrfach in unterschiedlichen Streckenabschnitten auftritt.
- Die Fahrt in eine Kurve hinein bzw. aus einer Kurve heraus ist durch eine Lenkdynamik beim Einlenk- und Auslenkvorgang gekennzeichnet. Eine permanente Kurvenfahrt erfordert vom Fahrer häufigere Lenkkorrekturen als eine Geradeausfahrt.

Aufgrund der zwei obengenannten Feststellungen kann durch Beobachtung der zeitlichen Entwicklung des Geschwindigkeitsunterschieds zwischen linkem und rechtem Rad der (nicht angetriebenen oder als nicht angetrieben angesehenen) Achse eine Geradeausfahrt ermittelt werden.

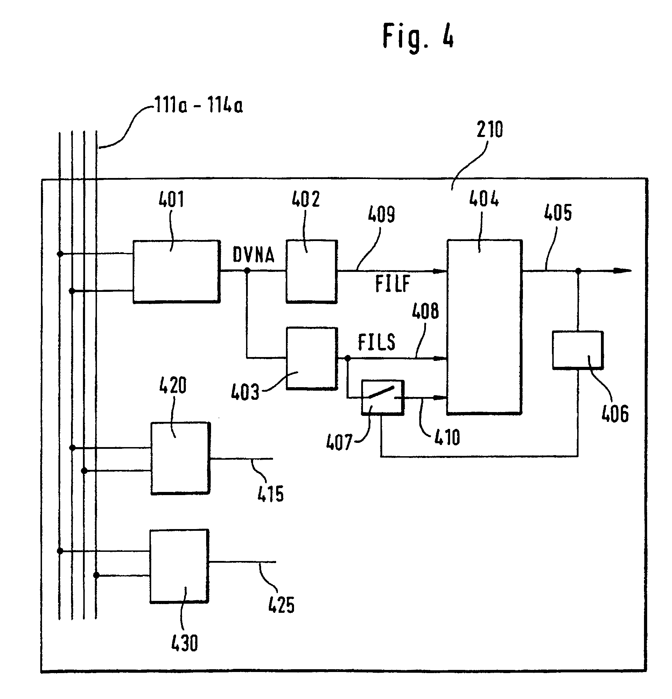

Fig. 4 zeigt eine Logik, die zur Geradeauserkennung dient. Sie kann beispielsweise in der Zustandserkennung 210 in Fig. 2 implementiert sein. In 401 wird der prozentuale Geschwindigkeitsunterschied der Räder einer Achse, vorzugsweise der nicht angetriebenen (oder der als nicht angetrieben angesehenen) Achse, ermittelt. Hierzu werden die Radgeschwindigkeiten der Räder dieser Achse empfangen, für ein Fahrzeug mit Heckantrieb demnach die Signale 111a und 112a von der Vorderachse. Die Einrichtung 401 kann die Differenz, vorzugsweise die normierte Differenz, vorzugsweise normiert auf die kleinere der beiden Geschwindigkeiten, bilden und ausgeben. Der Wert kann vorzeichenbehaftet in Abhängigkeit von den Geschwindigkeitsverhältnissen (V4>v3 oder v3>v4) sein. 402 und 403 sind zwei Filter mit unterschiedlichen Zeitkonstanten. Sie empfangen das Ausgangssignal DVNA der Einrichtung 401 und filtern es. Es handelt sich jeweils um Tiefpaßfilter. 403 hat dabei eine größere Zeitkonstante als Filter 402, beispielsweise eine um mindestens den Faktor 5 bis 10 höhere Zeitkonstante. Die Zeitkonstante des Tiefpaßfilters 402 kann im Bereich zwischen 10 und 100 ms liegen. Als Ausgangssignale entstehen die Größen FILS (filter slow) und FILF (filter fast) . Im Block 404 werden diese Signale ausgewertet. Es wird ein Signal 405 erzeugt, das eine Geradeausfahrt kennzeichnet und das zur Erzeugung eines Signals zur Ansteuerung der Torschaltung 221 in Fig. 2 verwendet werden kann. Der langsam gefilterte Wert aus Filter 403 kann als "Gedächtnis" zu weiter zurückliegenden Werten verstanden werden. Wenn sich demnach ein Unterschied zwischen den beiden Filterausgangswerten FILF und FILS ergibt, ist dies ein Hinweis auf Lenkdynamik und damit ein Hinweis auf das Nichtvorliegen einer Geradeausfahrt.

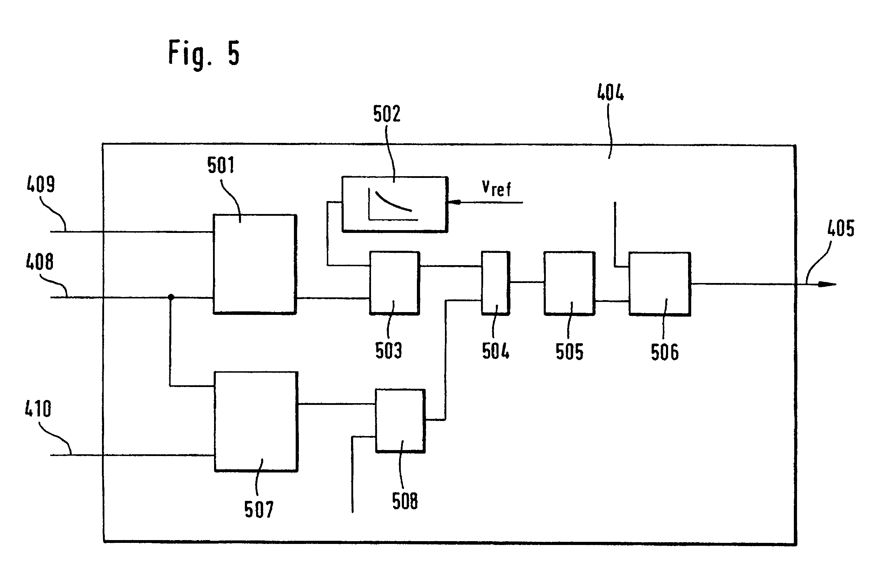

Die Logik 404 ist im Detail in Fig. 5 dargestellt. Im Block 501 wird der Betrag der Differenz zwischen FILS und FILF gebildet. Diese Differenz wird im Block 503 mit einer von der Fahrgeschwindigkeit Vref abhängigen Schwelle aus Einrichtung 502 verglichen. Die Schwelle kann mit steigender Fahrgeschwindigkeit sinken. Demnach empfängt Block 502 die Fahrzeuggeschwindigkeit als Eingangsgröße. Wenn die Differenz (Ausgangsgröße von Block 501) geringer als die Schwelle (Ausgangsgröße von Block 502) ist, ist dies ein Indiz für Geradeausfahrt (Block 503 schaltet durch). Das geschwindigkeitsabhängige Absenken der Schwelle erfolgt, da zum einen die Lenkkorrekturen des Fahrers bei zunehmenden Geschwindigkeiten geringer werden und zum anderen aufgrund fahrphysikalischer Grenzen der Wertebereich von FILS immer enger wird. In den Blöcken 505 und 506 erfolgt eine zeitliche Überwachung. Hier kann überwacht werden, ob die Schwelle über einen bestimmten Zeitraum (etwa zwischen 1 und 8 s, vorzugsweise zwischen 2 und 4 s, vollständig oder über einen bestimmten Anteil der Zeit (größer als 90 %, größer als 95 % der Zeitspanne) eingehalten wird. Anders ausgedrückt wird eine Schwellenwertüberschreitung bis zu einer gewissen Dauer hin akzeptiert, um die Störresistenz zu erhöhen. Wenn die Bedingung erfüllt ist, wird eine Geradeausfahrt erkannt und das Signal 405 ausgegeben. Dynamische Lenkmanöver werden mit dieser Logik herausgefiltert.

Die Filterzeitkonstante von Filter 403 ist so zu wählen, daß Einlenkvorgänge hinreichend lange abgebildet werden. Die einer Kurvenfahrt folgende Geradeausfahrt hingegen soll hinreichend schnell wieder erkannt werden, FILS und FILF müssen also hinreichend schnell konvergieren. Um langsame oder kontinuierliche Einlenkvorgänge zu erkennen, ist eine zusätzliche Logik zur Überwachung von langsamen Änderungen von FILS (Wegdriften) vorgesehen. Der Wert von FILS wird zu einem bestimmten Zeitpunkt abgegriffen und im Block 407 in Fig. 4 gespeichert. Anschließend werden die Abweichungen zwischen diesem gespeicherten Wert und FILS im Block 507 gebildet und im Block 508 mit einer Schwelle verglichen. Damit wird überprüft, ob FILS in einem Toleranzband und den gespeicherten Wert (in Block 407) liegt. Diese Bedingung kann als zusätzliche Bedingung zur Erkennung der Geradeausfahrt verwendet werden, sie kann im Block 504 mit den weiter oben beschriebenen Signalen UND-verknüpft werden. Durch die gezeichnete Ausführungsform wird auch diese letztgenannte Bedingung über die zeitliche Bewertung 505 und 506 geführt. Das Ausgangssignal 405 kann entweder zum Auslösen des Querabgleichs bzw. zum Einspeichern von hierfür geeigneten Daten (die dann ermittelten Radgeschwindigkeitswerte der Räder an der betrachteten Achse) verwendet werden.

In Fig. 4 sind als Blöcke 420 und 430 schematisch Logiken zur Erkennung eines Zustands, zu dem der Längsabgleich für die eine bzw. andere Seite günstig ist, gezeigt. Beispielsweise kann 420 eine Logik zur Erkennung eines günstigen Zustands für den Längsabgleich an der rechten Fahrzeugseite sein. Die Logik nimmt dann zumindest Bezug auf die Radsignale 112a, 113a (bzw. auf korrigierte Werte hiervon). Die Logik 420 kann auch auf weitere (nicht gezeigte) Signale Bezug nehmen, z.B. Erkennung einer Geradeausfahrt durch geeignete Zusatzsensorik. Wenn ein günstiger Zustand erkannt wird, wird das Signal 415 ausgegeben, das diesen Zustand anzeigt und das weitere Maßnahmen, beispielsweise Einspeichern von Raddaten oder Vornahme des Längsabgleichs veranlaßt. Sinngemäß das gleiche gilt für Logik 430. Sie kann zur Erkennung eines günstigen Zustands für den Längsabgleich der linken Seite ausgelegt sein. Sie nimmt dann Bezug auf die Radsignale 111a und 114a und ggf. auf weitere (nicht gezeigte) Signale. Sie kann ein Signal 425 ausgeben, das analog zum Signal 415 zu verstehen ist. Somit bilden die Signale 405, 415 und 425 insgesamt eine Gruppe von Signalen, die jeweils für sich einen Einzelabgleich (längs oder quer) bzw. die Einspeicherung von Daten hierfür veranlassen können.

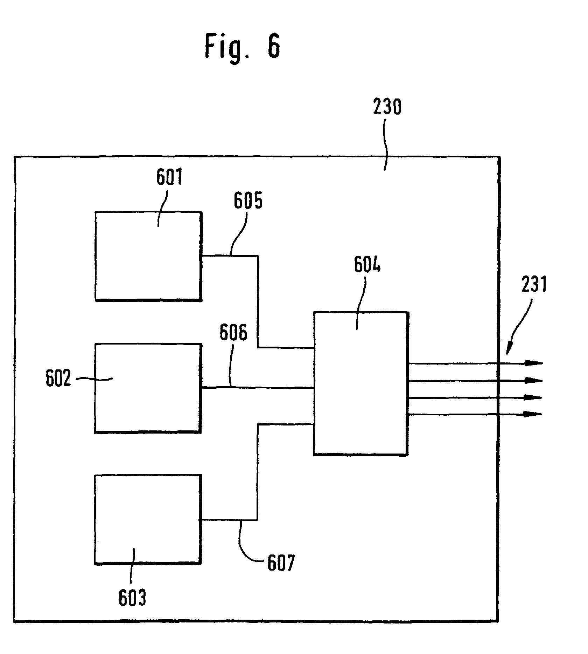

Fig. 6 zeigt schematisch die Korrekturfaktorermittlung 230 aus Fig. 2. Sie weist Vorrichtungen 601 bis 603 zur Vornahme dreier Einzelabgleiche (längs bzw.

quer) sowie die Einrichtung 604 zum Vornehmen des Gesamtabgleichs und zum Ermitteln der Korrekturwerte auf. In der gezeigten Ausführungsform ist 601 die Einrichtung zur Vornahme des Querabgleichs an der nicht angetriebenen oder der als nicht angetrieben angesehenen Achse, 602 und 603 sind Vorrichtungen zur Vornahme des Längsabgleichs an der linken und an der rechten Achse. Die Ausgaben 605 bis 607 dieser Komponenten werden im Gesamtabgleich 604 empfangen und bearbeitet. Die Komponenten 601 bis 603 empfangen die jeweils benötigten Eingangssignale. Der Übersichtlichkeit halber sind sie in Fig. 6 nicht dargestellt. Auch die Einrichtung 604 kann weitere Signale empfangen. Die Einrichtungen 601 bis 603 für den Einzelabgleich können frühestens dann tätig werden, wenn die für den jeweiligen Abgleich benötigten Raddaten vorliegen, sei es, weil sie gerade ermittelt werden oder weil sie schon vorher eingespeichert wurden. Die Einrichtung 604 wird tätig, wenn von den Einrichtungen 601 bis 603 jeweils die Einzelabgleiche vorgenommen wurden.

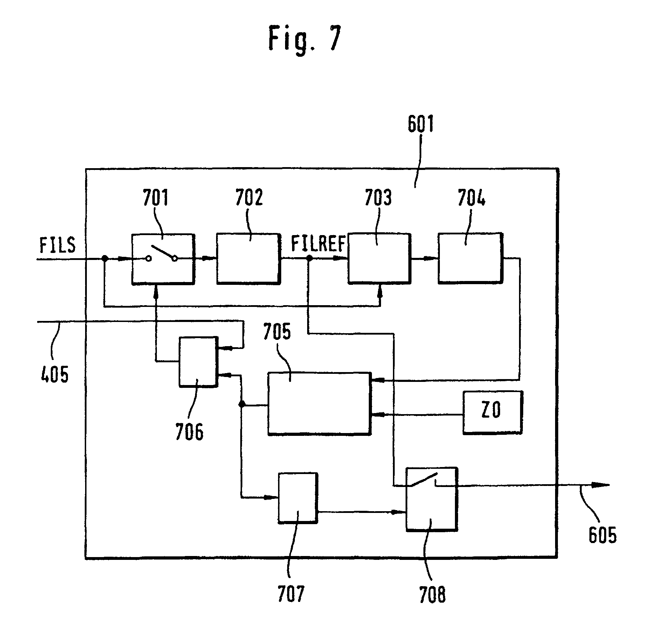

Fig. 7 zeigt schematisch eine Ausführungsform einer Logik zur Vornahme des Querabgleichs. Sie entspricht der Komponente 601 in Fig. 6. Die Einrichtung empfängt das Signals FILS aus der Erkennungseinrichtung (oder erzeugt es selbst). Außerdem empfängt sie das Signal 405, das eine erkannte Geradeausfahrt anzeigt. Wird eine Geradeausfahrt erkannt, wird der Wert von FILS im Zwischenspeicher 702 abgelegt und als Wert FILREF ausgegeben. Dies erfolgt beim erstmaligen Erkennen der Geradeausfahrt. In der Folgezeit wird FILREF mit der halben Differenz von FILREF und FILS nachgeführt (Block 703). Bei jedem Nachführen wird FILREF mit dem aktuellen FILS-Wert verglichen. Wird eine definierte Genauigkeit erreicht (wird über Differenz von FILREF und FILS erkannt), wird ein Zähler 704 inkrementiert. Die Höhe des Zählerstands stellt ein Indiz für die Sicherheit des Wertes FILREF dar. Wird ein hinreichend großer Zählerstand erreicht (20), wird der Wert FILREF als gesichert angesehen und festgeschrieben. Im Vergleicher 705 erfolgt hierzu ein Vergleich des Zählerstands des Zählers 704 mit einer Schwelle Z0. 707 ist eine Invertierung. 708 ist ein Schalter, der den Wert FILREF auf den Ausgang 605 weiterschaltet, wenn der Zählerstand 704 hinreichend hoch ist. Im Block 706 werden Geradeaussignal 405 und das Bestätigungssignal aus dem Vergleicher 705 UND verknüpft, um den Schalter 701 betätigen zu können. Auch nach dem Festschreiben von FILREF wird bei wiederkehrenden Genauigkeitsbestätigungen der Zähler weiter inkrementiert, um eine zunehmende Fehlerresistenz zu erreichen. Wenn die Geradeauserkennungskriterien erfüllt sind, die Genauigkeitsschwelle aber deutlich unterschritten wird, wird der Zähler 704 dekrementiert. Die Zählweise kann hysteresebehaftet sein, beispielsweise indem das Dekrementieren langsamer als das Inkrementieren erfolgt (Dekrement = Inkrement/3). Unterschreitet der Zähler ZO, kann FILREF wieder geändert werden.

Um unterschiedliche Fahrsituationen statistisch bewerten zu können, kann das Inkrementieren bzw. Dekrementieren des Zählers 704 zusätzlich zeitlich begrenzt sein. Die Anzahl der Änderungen des Zählers 704 in einem definierten Zeitintervall kann begrenzt sein, beispielsweise auf 2x in einem Zeitintervall von ca. 2-12 s. Überschreitet der Zählerstand die Bestätigungsschwelle Z0, kann auf ein größeres Zeitraster, etwa 10-20 s, umgeschaltet werden, indem der Zähler begrenzt oft, beispielsweise nur einmal, inkrementiert bzw. dekrementiert werden darf.

Als Ergebnis des Querabgleichs erscheint ein bestätigter Wert von FILREF am Ausgang 605, also letztlich ein sich aus FILS ergebender Wert.

In den Komponenten 602 und 603 der Fig. 6 können die weiter oben erwähnten Formeln implementiert sein, um die Werte Kv1 bis Kv4 zu ermitteln. So kann beispielsweise die Komponente 602 die Größen Kv1 und Kv4 ausgeben, Komponente 603 gäbe dann Kv2 und Kv3 aus. Somit werden von der Komponente 604 die Werte Kv1, Kv2, Kv3, Kv4 und FILREF empfangen. Daraus können, wie nachfolgend beschrieben, die Korrekturfaktoren K1, K2, K3 und K4 für die Räder 101 bis 104 bzw. deren Radgeschwindigkeiten ermittelt werden.

Grundsätzlich gilt, daß die beiden individuell vorgenommenen Längsabgleiche über den einmal vorgenommenen Querabgleich zueinander in Beziehung gesetzt werden können, so daß schließlich die gestellte Forderung, wonach die Geschwindigkeiten aller Räder paarweise miteinander vergleichbar sein sollen, erfüllt werden kann. Darüber hinaus können weitere Forderungen bestehen: Beispielsweise kann es wünschenswert sein, die Räder auf das am langsamsten drehende Rad abzugleichen. Hierfür kann das nachfolgend beschriebene Verfahren verwendet werden. Es bezieht sich auf das Beispiel eines heckgetriebenen Fahrzeugs. Soll es auf ein frontgetriebenes Fahrzeug angewendet werden, wären die Indizes zwischen Vorderachse und Hinterachse zu vertauschen (1 mit 4 und 2 mit 3).

Vergleicht man die Differenz von Kv1 und Kv2 mit dem Wert FILREF, kann darauf erkannt werden, auf welcher Seite die seitenweise korrigierten Radgeschwindigkeiten größer sind und um welchen Betrag, nämlich um Kv2 - Kv1 - FILREF. Die endgültigen Korrekturwerte K1 bis K4 ergeben sich unter Berücksichtigung dieses Korrekturbetrags zu:
Hilfsgröße: DIF = Kv2 - Kv1 - FILREF.

Wenn DIF > 0:

K1 = Kv1
K4 = Kv4
K2 = Kv2 - |DIF|
K3 = Kv3 - |DIF|

Wenn DIF < 0:

K1 = Kv1 - |DIF|
K4 = Kv4 - |DIF|
K2 = Kv2
K3 = Kv3.

Die so gewonnenen Korrekturwerte K1 bis K4 können in der Korrektureinrichtung 240 als Korrekturfaktoren zur multiplikativen Korrektur der durch die Radsensoren ermittelten Geschwindigkeitswerte verwendet werden. Wenn letztere als V1 bis V4 und die jeweils korrigierten Werte mit Vk1 bis Vk4 bezeichnet werden, so gilt

$$Vk1 = V1 \times K1 / C,$$

$$Vk2 = V2 \times K2 / C,$$

$$Vk3 = V3 \times K3 / C,$$

$$Vk4 = V4 \times K4 / C,$$

wobei C eine Normierungskonstante ist.

Als ein erstes zahlenmäßiges Beispiel wird angenommen, daß bei einem Querabgleich auf der rechten Fahrzeugseite eine im Vergleich zur linken Seite um 3 % kleinere Radgeschwindigkeit gemessen wurde (aufgrund größerer Reifendurchmesser). Die Längsabgleiche haben jeweils gleiche Geschwindigkeiten vorne rechts und hinten rechts bzw. vorne links und hinten links ergeben. FILREF ist demnach 3 %, Kv1 bis Kv4 seien jeweils 1000.

FILREF wird auf die gleiche Basis bezogen wie die vorläufigen Korrekturfaktoren Kv1 bis Kv4. Wenn diese Basis beispielsweise wie oben genannt 1000 ist, ergibt sich FILREF zu 30. Aus den angegebenen Gleichungen ergeben sich die resultierenden Korrekturwerte K2 = K3 = 1000 und K1 = K4 = 970.

In einem zweiten Beispiel für ein heckgetriebenes Fahrzeug werden aufgrund von Reifendurchmesserabweichungen unterschiedliche Radgeschwindigkeiten gemessen. In Relation zur minimalen Radgeschwindigkeit ist V1 (vorne links) um 5 % größer, V4 (hinten links) um 3 % größer. Über den Längsabgleich links ergibt sich Kv1 = 980, Kv4 gleich 1000, Kv2 = Kv3 = 1000. Im Querabgleich ergibt sich FILREF zu 5 % bzw. (normiert auf 1000) zu 50. Die Korrekturwerte ergeben sich dann zu K1 = 950, K2 = K3 = 1000 und K4 = 970.

Mit den oben beschriebenen Verfahren und Vorrichtungen ist es möglich, Korrekturwerte, insbesondere Korrekturfaktoren, zur Korrektur gemessener Radgeschwindigkeiten schnell und zuverlässig zu ermitteln. Dadurch erhöht sich die Zuverlässigkeit der Regelmaßnahmen, die bezugnehmend auf die korrigierten Radgeschwindigkeiten getroffen werden.

Es wird ebenso möglich mit den korrigierten Radgeschwindigkeiten der nicht angetriebenen oder der als nichtangetrieben angesehenen Achse die geometriebedingten Geschwindigkeitsdifferenzen bei Kurvenfahrt auszuwerten und eine Querbeschleunigungsberechnung durchzuführen.

**Patentansprüche**

1.  Verfahren zum Ermitteln von Korrekturwerten für die Radgeschwindigkeiten eines Fahrzeugs, mit dem Schritt Ermitteln der Radgeschwindigkeiten der Räder (101-104) des Fahrzeugs während der Fahrt,
    **dadurch gekennzeichnet, daß** die Radgeschwindigkeiten der Räder (101-104) des Fahrzeugs gruppenweise für die Räder der nicht angetriebenen Achse (105 bzw. 106) und für die Räder der linken Fahrzeugseite (101,104) und der rechten Fahrzeugseite (102,103) ausgewertet werden, und nach Maßgabe der Auswertungsergebnisse Korrekturwerte für die einzelnen Räder (101-104) des Fahrzeugs ermittelt werden.

2.  Verfahren nach Anspruch 1, **dadurch gekennzeichnet, daß** die gruppenweise Auswertung für Radgeschwindigkeiten bezugnehmend auf Radgeschwindigkeitswerte erfolgt, die während eines Fahrzustands ermittelt werden, in dem für die Auswertung der Radgeschwindigkeitswerte der betrachteten Gruppe günstige Bedingungen vorliegen.

3.  Verfahren nach einem der vorherigen Ansprüche, **dadurch gekennzeichnet, daß** gruppiert nach Fahrzeugachsen diejenigen ermittelten Radgeschwindigkeiten der Räder des Fahrzeugs ausgewertet werden, die während einer Geradeausfahrt des Fahrzeugs ermittelt werden.

4.  Verfahren nach einem der vorherigen Ansprüche, **dadurch gekennzeichnet, daß** gruppiert nach Fahrzeugseiten diejenigen Radgeschwindigkeiten der Räder des Fahrzeugs ausgewertet werden, die während des ausgekuppelten Zustandes ermittelt werden.

5.  Verfahren nach einem der vorherigen Ansprüche, **dadurch gekennzeichnet, daß** gruppiert nach Fahrzeugseiten diejenigen Radgeschwindigkeiten der Räder des Fahrzeugs ausgewertet werden, die während eines Fahrzustandes ermittelt werden, in dem das Antriebsmoment oder die Fahrzeugbeschleunigung positiv ist und die Geschwindigkeit des Rades an der angetriebenen oder als angetrieben angesehenen Achse kleiner ist als die Geschwindigkeit des Rades an der nicht angetriebenen oder als nicht angetrieben angesehenen Achse, oder während eines Fahrzustands, in dem das Antriebsmoment oder die Fahrzeugbeschleunigung negativ ist und die Geschwindigkeit des Rades an der angetriebenen oder als angetrieben angesehenen Achse größer ist als die Geschwindigkeit des Rades an der nicht angetriebenen oder als nicht angetrieben angesehenen Achse.

6.  Verfahren nach einem der vorherigen Ansprüche, **dadurch gekennzeichnet, daß** die für die nach Fahrzeugseiten gruppierte Auswertung herangezogenen Radgeschwindigkeiten zu anderen Zeiten ermittelt werden können als die für die nach Fahrzeugachsen gruppierte Auswertung herangezogenen Radgeschwindigkeiten.

7.  Verfahren nach einem der vorherigen Ansprüche, **dadurch gekennzeichnet, daß** die gruppenweise Auswertung von Radgeschwindigkeiten die Quotientenbildung und/oder die Differenzbildung und/oder die paarweise Normierung der Radgeschwindigkeiten der Räder dieser Gruppe umfaßt.

8.  Verfahren nach einem der vorherigen Ansprüche, **dadurch gekennzeichnet, daß** für ein Rad, vorzugsweise für das am langsamsten drehende Rad, ein Korrekturwert gewählt wird und bezugnehmend darauf und nach Maßgabe der Auswertungsergebnisse Korrekturwerte für die übrigen Räder des Fahrzeugs ermittelt werden.

9.  Verfahren nach einem der vorherigen Ansprüche, **dadurch gekennzeichnet, daß** für jede Fahrzeugseite für eines der Räder, vorzugsweise für das langsamer drehende, ein vorläufiger Korrekturwert gewählt wird und für das jeweils andere Rad an dieser Seite ein vorläufiger Korrekturwert nach Maßgabe der an dieser Seite ermittelten Radgeschwindigkeiten ermittelt wird.

10.  Verfahren nach Anspruch 9, **dadurch gekennzeichnet, daß** aus den vorläufigen Korrekturwerten nach Maßgabe der an einer Achse ermittelten Radgeschwindigkeiten die endgültigen Korrekturwerte ermittelt werden.

11.  Verfahren nach einem der vorherigen Ansprüche, **dadurch gekennzeichnet, daß** die Ermittlung der Radgeschwindigkeit eines Rades die Messung der Drehgeschwindigkeit des Rades mittels eines Radsensors und ggf. die anschließende Filterung der gemessenen Werte umfaßt.

12.  Verfahren nach einem der vorherigen Ansprüche und nach Anspruch 3, **dadurch gekennzeichnet, daß** die Geradeausfahrt des Fahrzeugs durch Auswerten des zeitlichen Verlaufs des Unterschieds der Radgeschwindigkeiten der Räder vorzugsweise der nicht angetriebenen Achse des Fahrzeugs erkannt wird.

13. Verfahren nach Anspruch 12, **dadurch gekennzeichnet, daß** zur Auswertung des zeitlichen Verlaufs des Unterschieds der Radgeschwindigkeiten das Unterschiedssignal über einen ersten Tiefpaß mit einer ersten Zeitkonstante und parallel dazu über einen zweiten Tiefpaß mit einer zweiten Zeitkonstante, die höher ist als die erste Zeitkonstante, geführt wird, wobei überprüft wird, ob der Betrag der Differenz der Ausgangssignale beider Filter kleiner als ein Schwellenwert ist.

14. Verfahren nach Anspruch 13, **dadurch gekennzeichnet, daß** die erste Zeitkonstante im Bereich zwischen 10 und 100 ms liegt.

15. Verfahren nach Anspruch 13 oder 14, **dadurch gekennzeichnet, daß** die zweite Zeitkonstante den 5- bis 15-fachen Wert der ersten Zeitkonstante hat.

16. Verfahren nach einem der Ansprüche 13 bis 15, **dadurch gekennzeichnet, daß** der Schwellenwert mit steigender Fahrzeuggeschwindigkeit sinkt.

17. Verfahren nach einem der Ansprüche 13 bis 16, **dadurch gekennzeichnet, daß** überprüft wird, ob innerhalb einer Torzeit der Betrag der Differenz der Ausgangssignale beider Filter den Schwellenwert immer oder zumindest ausreichend lange unterschreitet, und daß dann, wenn dieses Kriterium erfüllt ist, auf eine Geradeausfahrt erkannt wird.

18. Verfahren nach einem der Ansprüche 13 bis 17, **dadurch gekennzeichnet, daß** zur Erkennung der Geradeausfahrt außerdem der zeitliche Verlauf des Ausgangssignals des zweiten Tiefpasses dahingehend überprüft wird, ob es innerhalb einer Torzeit einen Schwellenwert immer oder ausreichend lange unterschreitet.

19. Verfahren nach einem der Ansprüche 13 bis 18, **dadurch gekennzeichnet, daß** die gruppenweise Auswertung für die Räder einer Achse fortlaufend erfolgt, indem bei erkannter Geradeausfahrt das Ausgangssignal des zweiten Tiefpasses als ein das Ergebnis der Auswertung vorläufig darstellender Referenzwert gespeichert wird, der Referenzwert mit aktuellen Ausgangssignalen des zweiten Tiefpasses verglichen wird und bei Unterschieden der Referenzwert dem aktuellen Signalwert mit einem Anteil des Unterschieds nachgeführt wird, wobei außerdem dann, wenn der Unterschied innerhalb eines bestimmten Zeitraumes ausreichend klein war, ein Bestätigungssignal erzeugt wird, das zur Freigabe des gespeicherten Referenzwertes verwendet wird.

20. Verfahren zur Bestimmung der Radgeschwindigkeiten eines Fahrzeugs, mit den Schritten Messen der Radgeschwindigkeiten mit Radsensoren, für jedes Rad Ermitteln eines Korrekturwerts für die an diesem Rad gemessene Radgeschwindigkeit mit einem Verfahren nach einem der vorherigen Ansprüche, und Korrigieren der gemessenen Radgeschwindigkeiten mit den entsprechenden Korrekturwerten.

21. Verfahren nach Anspruch 20, **dadurch gekennzeichnet, daß** die Korrekturwerte Korrekturfaktoren sind, mit denen die gemessenen Radgeschwindigkeiten multipliziert werden.

22. Verfahren nach einem der vorherigen Ansprüche und nach Anspruch 3, **dadurch gekennzeichnet, daß** der Fahrzustand mit den für die Auswertung der Radgeschwindigkeitswerte der betrachteten Gruppe günstigen Bedingungen anhand von korrigierten Radgeschwindigkeitswerten ermittelt wird, wobei die Korrektur mit früher ermittelten Korrekturwerten erfolgt.

23. Vorrichtung zum Ermitteln von Korrekturwerten für die Radgeschwindigkeiten eines Fahrzeugs, mit Radsensoren (111-114) zum Ermitteln der Radgeschwindigkeiten der Räder (101-104) des Fahrzeugs während der Fahrt, **gekennzeichnet durch** eine Ermittlungseinrichtung (230, 601-607), die die Radgeschwindigkeiten der Räder (101-104) des Fahrzeugs gruppenweise für zumindest eine Fahrzeugachse (105 oder 106) und zumindest eine Fahrzeugseite auswertet und nach Maßgabe der Auswertungsergebnisse Korrekturwerte für die einzelnen Räder (101-104) des Fahrzeugs ermittelt, wobei die Ermittlungseinrichtung (230, 601-607) eine Einrichtung (601) für die gruppenweise Auswertung der Radgeschwindigkeiten der Räder der nicht angetriebenen Achse (105 bzw. 106) und je eine Einrichtung (602,603) für die gruppenweise Auswertung der Radgeschwindigkeiten der Räder der linken Fahrzeugseite (101,104) und der rechten Fahrzeugseite (102,103) aufweist.

24. Vorrichtung nach Anspruch 23, **gekennzeichnet durch** eine Zustandserkennungseinrichtung (210, 401 - 410), die einen Fahrzustand ermittelt, in dem für die gruppenweise Auswertung von Radgeschwindigkeiten günstige Bedingungen für die Radgeschwindigkeitswerte der betrachteten Gruppe vorliegen.

25. Vorrichtung nach Anspruch 24, **dadurch gekennzeichnet, daß**

die Zustandserkennungseinrichtung (210, 401 - 410) eine Erkennungseinrichtung (401 - 410) für die Geradeausfahrt des Fahrzeugs aufweist.

26. Vorrichtung nach Anspruch 24 oder 25, **dadurch gekennzeichnet, daß** die Zustandserkennungseinrichtung (210, 401 - 410) eine Erkennungseinrichtung für den ausgekuppelten Zustand im Fahrzeug aufweist.

27. Vorrichtung nach einem der vorherigen Ansprüche, **dadurch gekennzeichnet, daß** eine Vorrichtung (601 - 603) zur gruppenweise Auswertung von Radgeschwindigkeiten eine Vorrichtung (401) zur Quotientenbildung und/oder zur Differenzbildung und/oder zur paarweise Normierung der Radgeschwindigkeiten der Räder dieser Gruppe umfaßt.

28. Vorrichtung nach einem der vorherigen Ansprüche und nach Anspruch 25, **dadurch gekennzeichnet, daß** die Erkennungseinrichtung für die Geradeausfahrt des Fahrzeugs zumindest einen Tiefpaß (402, 403) aufweist, mit dem der Wert des Unterschieds der Radgeschwindigkeiten einer Achse bewertet wird.

29. Vorrichtung nach Anspruch 28, **dadurch gekennzeichnet, daß** die Erkennungseinrichtung für die Geradeausfahrt einen ersten Tiefpaß (402) mit einer ersten Zeitkonstante und einen zweiten Tiefpaß (403) mit einer zweiten Zeitkonstante, die höher ist als die erste Zeitkonstante, geführt wird, aufweist, und eine Überprüfungseinrichtung, die die Abweichung der Ausgangssignale beider Filter überprüft.

30. Vorrichtung nach Anspruch 29, **dadurch gekennzeichnet, daß** die erste Zeitkonstante im Bereich zwischen 10 und 100 ms liegt.

31. Vorrichtung nach Anspruch 29 oder 30, **dadurch gekennzeichnet, daß** die zweite Zeitkonstante den 5- bis 15-fachen Wert der ersten Zeitkonstante hat.

32. Vorrichtung nach einem der Ansprüche 29 bis 31, **gekennzeichnet durch** eine Einrichtung (505, 506), die überprüft, ob innerhalb einer Torzeit der Betrag der Differenz der Ausgangssignale beider Filter den Schwellenwert immer oder zumindest ausreichend lange unterschreitet.

33. Vorrichtung nach einem der Ansprüche 29 bis 32, **gekennzeichnet durch** eine Einrichtung (507, 508), die den zeitliche Verlauf des Ausgangssignals des zweiten Tiefpasses(403) überprüft.

**Claims**

1. A method for determining correction values for the wheel speeds of a vehicle, comprising the step of determining the speeds of the vehicle wheels (101 - 104) during travel,
**characterized in that** the speeds of the wheels (101-104) of the vehicle are evaluated, in groups, for the wheels of the non-driven axle (105 and 105, respectively), and for the wheels of the left-hand vehicle side (101, 104) and the right-hand vehicle side (102, 103), and that correction values for the individual wheels (101-104) of the vehicle are determined in accordance with these results of evaluation.

2. A method according to claim 1,
**characterized in that** the evaluation in groups is effected for wheel speeds in relation to the wheel speed values determined during a state of travel in which conditions exist that are favorable for the evaluation of the wheel speed values of the group under consideration.

3. A method according to any one of the preceding claims,
**characterized in that**, grouped by vehicles axles, those determined speeds of the vehicle wheels are evaluated, that are determined during a straight travel of the vehicle.

4. A method according to any one of the preceding claims,
**characterized in that**, grouped by vehicle sides, those speeds of the vehicle wheels are evaluated that are determined during the disengaged state.

5. A method according to any one of the preceding claims,
**characterized in that**, grouped by vehicle sides, those speeds of the vehicle wheels are evaluated that are determined during a travel state in which the driving moment or the vehicle acceleration is positive and the speed of the wheel on the axle driven or deemed driven is lower than the speed of the wheel on the axle non-driven or deemed non-driven, or during a travel state in which the driving moment or the vehicle acceleration is negative and the speed of the wheel on the axle driven or deemed driven is higher than the speed of the wheel on the axle non-driven or deemed non-driven.

6. A method according to any one of the preceding claims,
**characterized in that** the wheel speeds used for the evaluation grouped by vehicle sides can be determined at different times than the wheel speeds used for the evaluation grouped by vehicle axles.

**7.** A method according to any one of the preceding claims,
**characterized in that** the evaluation in groups of wheel speeds covers the ratio formation and/or difference formation and/or the pair-wise normalization of the speeds of the wheels of this group.

**8.** A method according to any one of the preceding claims,
**characterized in that** a correction value is selected for one wheel, preferably the slowest wheel, and in relation thereto and in accordance with the results of evaluation, correction values are determined for the rest of the vehicle wheels.

**9.** A method according to any one of the preceding claims,
**characterized in that** on each vehicle side a preliminary correction value is selected for one of the wheels, preferably for the slower one, and for the respectively other wheel on this side, a preliminary correction value is determined in accordance with the wheel speeds determined on that side.

**10.** A method according to claim 9,
**characterized in that** the final values of correction are determined from the preliminary values of correction in accordance with the wheel speeds determined on one axle.

**11.** A method according to any one of the preceding claims,
**characterized in that** the determination of the wheel speed of one wheel covers sensing the rotating speed of the wheel by means of a wheel sensor and, optionally, subsequent filtering of the sensed values.

**12.** A method according to any one of the preceding claims and according to claim 3,
**characterized in that** the straight travel of the vehicle is detected by evaluating the time sequence of the difference of the wheel speeds preferably on the non-driven axle of the vehicle.

**13.** A method according to claim 12,
**characterized in that**, for evaluating the time sequence of the difference of the wheel speeds, the signal of difference is guided across a first deep pass with a first time constant and, in parallel thereto, across a second deep pass with a second time constant exceeding the first time constant, thereby checking whether the amount of difference of the output signals of the two filters is below a threshold value.

**14.** A method according to claim 13,
**characterized in that** the first time constant is in the range of between 10 and 100 ms.

**15.** A method according to claims 13 or 14,
**characterized in that** the second time constant has a value 5 to 15 times the value of the first time constant.

**16.** A method according to any one of claims 13 through 15,
**characterized in that** the threshold value decreases with an increasing vehicle speed.

**17.** A method according to any one of claims 13 through 16,
**characterized by** the step of checking whether the amount of difference of the output signals of both filters, within a gating time, permanently or at least for an adequate period of time, falls below the threshold value, and that, once this criterion is fulfilled, straight driving is considered to prevail.

**18.** A method according to any one of claims 13 through 17,
**characterized in that**, for detecting straight driving, also the time sequence of the output signal of the second deep pass is checked whether, within a gating time, it permanently or for an adequate period of time, falls below a threshold value.

**19.** A method according to any one of claims 13 through 18,
**characterized in that** the evaluation in groups for the wheels of one axle is continuous because upon detection of straight driving, the output signal of the second deep pass is stored as a reference value preliminarily representing the result of the evaluation, the reference value is compared to current output signals of the second deep pass and, in case of differences, the reference value is adapted with part of the difference to the current signal value, with an acknowledgement signal being additionally generated and used to release the stored reference value if the difference within a predetermined period of time was sufficiently small.

**20.** A method for determining the wheel speeds of a vehicle, comprising the following steps: sensing the wheel speeds by wheel sensors, determining a correction value for each wheel in respect of the wheel speed sensed on that wheel in accordance with a method of one of the preceding claims, and correcting the sensed wheel speeds in accordance with the corresponding values of correction.

**21.** A method according to claim 20,
**characterized in that** the values of correction are factors of correction by which the sensed wheel speeds are multiplied.

**22.** A method according to any one of the preceding claims and according to claim 3, **characterized in that** the driving state is determined under conditions favorable for the evaluation of the wheel speed values of the group in consideration of the basis of corrected wheel speed values, with the correction being effected in accordance with previously determined values of correction.

**23.** Device for determining correction values for the wheel speeds of a vehicle, comprising wheel sensors (111-114) for determining the speeds of the wheels (101-104) of the vehicle during travel, **characterized by** a means of determination (230, 601-607) evaluating the speeds of the wheels (101-104) of the vehicle, in groups, for at least one vehicle axle (105 or 106) and at least one vehicle side and determining correction values for the individual wheels (101-104) of the vehicle in accordance with these results of evaluation, with the means of determination (230, 601-607) comprising a device (601) for evaluating, in groups, the speeds of the wheels of the non-driven axle (105 and 106, respectively), and respectively one device (602, 603) for evaluating, in groups, the speeds of the wheels of the left-hand vehicle side (101,104) and the right-hand vehicle side (102, 103).

**24.** A device according to claim 23, **characterized by** a state detection means (210, 401 - 410) determining a driving state in which conditions for the wheel speed values of the group under consideration prevail that are favorable for evaluating wheel speeds, in groups.

**25.** A device according to claim 24, **characterized in that** the state detection means (210, 401 - 410) comprises a detecting means (401 - 410) for detecting straight travel of the vehicle.

**26.** A device according to claims 24 or 25, **characterized in that** the state detecting means (210, 401 - 410) comprises a detecting means for detecting the disengaged state in the vehicle.

**27.** A device according to any one of the preceding claims, **characterized in that** a device (601 - 603) for evaluating, in groups, wheel speeds comprises a means (401) for the ratio formation and/or the difference formation and/or for the normalization, in pairs, of the speeds of the wheels of the said group.

**28.** A device according to any one of the preceding claims and according to claim 25, **characterized in that** the detecting means for detecting the straight travel of the vehicle comprises at least one deep pass (402, 403) evaluating the value of the difference between the wheel speeds of one axle.

**29.** A device according to claim 28, **characterized in that** the detecting means for detecting the straight travel comprises a first deep pass (402) with a first time constant, and a second deep pass (403) with a second time constant exceeding the first time constant, and a check means for checking the difference of the output signals of the two filters.

**30.** A device according to claim 29, **characterized in that** the first time constant is in the range of between 10 and 100 ms.

**31.** A device according to claims 29 or 30, **characterized in that** the second time constant has a value 5 to 15 times the first time constant.

**32.** A device according to any one of claims 29 through 31, **characterized by** a means (505, 506) for checking whether the amount of difference of the output signals of both filters, within a gating time, permanently or at least for an adequate period of time, falls below the threshold value.

**33.** A device according to any one of claims 29 through 32, **characterized by** a means (507, 508) for checking the time sequence of the output signal of the second deep pass (403).

**Revendications**

**1.** Procédé pour la détermination de valeurs de correction pour les vitesses des roues d'un véhicule, avec l'étape de la détermination des vitesses de roue des roues du véhicule (101-104) pendant le parcours, **caractérisé en ce que** les vitesses de roue des roues (101-104) du véhicule sont évaluées par groupes pour les roues de l'essieu non moteur (105 ou 106) et pour les roues du côté gauche du véhicule (101, 104) et du côté droit du véhicule (102, 103), et **en ce que** des valeurs de correction sont déterminées pour les différentes mues (101- 104) du véhicule conformément aux résultats d'évaluation.

**2.** Procédé selon la revendication 1, **caractérisé en ce que** l'évaluation par groupes des vitesses de roue est effectuée en se référant aux valeurs des vitesses de roue, qui sont déterminées pendant un état du parcours dans lequel existent des conditions favorables à l'évaluation des vitesses de roue du groupe considéré.

**3.** Procédé selon l'une des revendications précédentes, **caractérisé en ce que** les vitesses de roue des roues du véhicule sont évaluées groupées selon les essieux du véhicule, qui sont déterminées pendant un parcours en ligne droite du véhicule.

**4.** Procédé selon l'une des revendications précédentes, **caractérisé en ce que** les vitesses de roue des roues du véhicule sont évaluées, groupées suivant les côtés du véhicule, qui sont déterminées pendant l'état débrayé.

**5.** Procédé selon l'une quelconque des revendications précédentes, **caractérisé en ce que** les vitesses de roue des roues du véhicule sont évaluées, groupées suivant les côtés du véhicule, lesquelles sont déterminées pendant un état du véhicule dans lequel le couple moteur ou l'accélération du véhicule est positif, et la vitesse de la roue sur l'essieu moteur ou l'essieu regardé comme moteur est plus petite que la vitesse de la roue sur l'essieu non moteur ou l'essieu regardé comme non moteur, ou bien pendant un état de marche dans lequel le couple moteur ou l'accélération du véhicule est négatif, et la vitesse de la roue sur l'essieu moteur ou l'essieu regardé comme non moteur est supérieure à la vitesse de la roue sur l'essieu non moteur ou l'essieu regardé comme non moteur.

**6.** Procédé selon l'une des revendications précédentes, **caractérisé en ce que** les vitesses de roue utilisées pour l'évaluation groupée selon les côtés du véhicule peuvent être déterminées à d'autres temps que les vitesses de roue utilisées pour une évaluation groupée selon les essieux du véhicule.

**7.** Procédé selon l'une des revendications précédentes, **caractérisé en ce que** l'évaluation groupée de vitesses de roue englobe la formation d'un quotient et/ou la formation d'une différence et/ou la normalisation par paires des vitesses de roue des roues de ce groupe.

**8.** Procédé selon l'une des revendications précédentes, **caractérisé en ce que**, pour une roue, de préférence pour la roue qui tourne le plus lentement, on choisit une valeur de correction et, en se référant à celle-ci et conformément aux résultats d'évaluation, des valeurs de correction sont déterminées pour les roues restantes du véhicule.

**9.** Procédé selon l'une des revendications précédentes, **caractérisé en ce que** pour chaque côté du véhicule pour une roue, de référence pour celle qui tourne plus lentement, on choisit une valeur de correction préalable, et pour l'autre roue respective de ce côté, on détermine une valeur de correction préalable conformément aux vitesses de roue déterminées de ce côté.

**10.** Procédé selon la revendication 9, **caractérisé en ce que** les valeurs de correction finales sont déterminées à partir des valeurs de correction préalables conformément aux vitesses de roue déterminées sur un essieu.

**11.** Procédé selon l'une des revendications précédentes, **caractérisé en ce que** la détermination de la vitesse de roue d'une roue englobe la mesure de la vitesse de rotation de la roue au moyen d'un capteur de roue, et le cas échéant le filtrage suivant de la valeur mesurée.

**12.** Procédé selon l'une des revendications précédentes et selon la revendication 3, **caractérisé en ce que** le parcours en ligne droite du véhicule est reconnu par évaluation de la variation dans le temps de la différence des vitesses de roue des roues, de préférence de l'essieu non moteur du véhicule.

**13.** Procédé selon la revendication 12, **caractérisé en ce que** pour l'évaluation de l'allure dans le temps de la différence des vitesses de roue, le signal de différence est guidé par l'intermédiaire d'un passe-bas avec une première constante de temps et parallèlement à cela, par l'intermédiaire d'un second passe- bas avec une seconde constante de temps, qui est supérieure à la première constante de temps, de sorte qu'on examine si la valeur de la différence des signaux de sortie des deux filtres est inférieure à une valeur de seuil.

**14.** Procédé selon la revendication 13, **caractérisé en ce que** la première constante de temps est dans la zone entre 10 et 100 ms.

**15.** Procédé selon la revendication 13 ou 14, **caractérisé en ce que** la seconde constante de temps a une valeur de 5 à 10 fois la valeur de la seconde constante de temps.

**16.** Procédé selon l'une des revendications 13 à 15, **caractérisé en ce que** la valeur de seuil s'abaisse lorsque la vitesse du véhicule croît.

**17.** Procédé selon l'une des revendications 13 à 16, **caractérisé en ce qu'**on examine si, à l'intérieur d'un créneau de temps, la valeur de la différence des signaux de sortie des deux filtres se trouve toujours, ou à tout le moins suffisamment longtemps, au-dessous de la valeur de seuil, et **en ce que**, lorsque ce critère est satisfait, un parcours en ligne droite est reconnu.

**18.** Procédé selon l'une des revendications 13 à 17, **caractérisé en ce que** pour la reconnaissance du parcours en ligne droite, en outre la variation dans le temps du signal de sortie du second passe-bas, est examinée en ce qui concerne si à l'intérieur d'un créneau de temps, il est toujours ou suffisamment longtemps au-dessous d'une valeur de seuil.

**19.** Procédé selon l'une des revendications 13 à 18, **caractérisé en ce que** l'évaluation par groupes pour les roues d'un essieu est effectuée d'une façon continue, par laquelle pour un parcours en ligne droite reconnu, le signal de sortie du second passe-bas est mis en mémoire comme une valeur de référence préalable représentant le résultat de l'évaluation, la valeur de référence est comparée aux signaux de sortie actuels du second passe-bas, et s'il y a une différence, la valeur de référence est asservie à la valeur actuelle du signal par une fraction de la différence, et en outre ensuite, si la différence était suffisamment petite à l'intérieur d'un espace de temps déterminé, un signal de confirmation est produit, qui est utilisé pour la délivrance de la valeur de référence mise en mémoire .

**20.** Procédé pour la détermination des vitesses de roue d'un véhicule, comportant les étapes de la mesure des vitesses de roue par des capteurs de roue, pour chaque roue la détermination d'une valeur de correction pour la vitesse de roue mesurée sur cette roue par un procédé selon l'une des revendications précédentes, et la correction des vitesses de roue mesurées par des valeurs de correction correspondantes.

**21.** Procédé selon la revendication 20, **caractérisé en ce que** les valeurs de correction sont des facteurs de correction par lesquels les vitesses de roue mesurées sont multipliées.

**22.** Procédé selon l'une des revendications précédentes et selon la revendication 3, **caractérisé en ce que** l'état du parcours est déterminé par les conditions favorables à l'évaluation des valeurs de vitesses de roue du groupe considéré en s'appuyant sur des valeurs de vitesses de roue corrigées, et la correction a lieu avec des valeurs de correction déterminées précédemment.

**23.** Dispositif pour la détermination de valeurs de correction pour les vitesses de roue d'un véhicule, comportant des capteurs de roue (111-114) pour la détermination des vitesses des roues (101-104) du véhicule pendant le parcours, **caractérisé par** un dispositif de détermination (230, 601-607) qui évalue par groupes les vitesses de roue des roues (101- 104) du véhicule pour à tout le moins un essieu du véhicule (105 ou 106) et à tout le moins un côté du véhicule et qui conformément aux résultats de l'évaluation, détermine des valeurs de correction pour les différentes roues (101-104) du véhicule, dans lequel le dispositif de détermination (230, 601-607) comprend un dispositif (601) pour l'évaluation par groupes des vitesses de roue des roues de l'essieu non moteur (105 ou 106) et toujours un dispositif (602, 603) pour l'évaluation par groupes des vitesses de roue des roues du côté gauche (101, 104) du véhicule et du côté droit (102, 103) du véhicule.

**24.** Dispositif selon la revendication 23, **caractérisé par** un dispositif de reconnaissance d'état (210, 401 - 410) qui détermine un état du parcours, dans lequel des conditions favorables existent pour l'évaluation par groupes de vitesses de roue, pour les valeurs des vitesses de roue du groupe considéré.

**25.** Dispositif selon la revendication 24, **caractérisé en ce que** le dispositif de reconnaissance d'état (210, 401 - 410) comporte un dispositif de reconnaissance (401 - 410) de parcours du véhicule en ligne droite.

**26.** Dispositif selon la revendication 24 ou 25, **caractérisé en ce que** le dispositif de reconnaissance d'état (210, 401 - 410) comporte un dispositif de reconnaissance pour l'état débrayé dans le véhicule.

**27.** Dispositif selon l'une des revendications précédentes, **caractérisé en ce qu'**un dispositif (601 - 603) pour l'évaluation par paires des vitesses de roue englobe un dispositif (401) pour la formation d'un quotient et/ou pour la formation d'une différence et/ou pour la normalisation par paires des vitesses de roue des roues de ce groupe.

**28.** Dispositif selon l'une des revendications précédentes et selon la revendication 25, **caractérisé en ce que** le dispositif de reconnaissance comporte à tout le moins un passe-bas (402, 403) pour le parcours en ligne droite du véhicule, par lequel la valeur de la différence des vitesses de roue d'un essieu est évaluée.

**29.** Dispositif selon la revendication 28, **caractérisé en ce que** le dispositif de reconnaissance du parcours en ligne droite comporte un premier passe-bas (402) avec une première constante de temps, et un second passe-bas (403) avec une seconde constante de temps, qui est supérieure à la première constante de temps, et un dispositif d'examen qui examine l'écart des signaux de sortie des deux filtres.

**30.** Dispositif selon la revendication 29, **caractérisé en ce que** la première constante de temps se situe dans la zone entre 10 et 100 ms.

**31.** Dispositif selon la revendication 29 ou 30, **caractérisé en ce que** la seconde constante de temps a une valeur de 5 à 15 fois la valeur de la première constante de temps.

**32.** Dispositif selon l'une des revendications 29 à 31, **caractérisé par** un dispositif (505, 506) qui examine si, à l'intérieur d'un créneau de temps, la valeur de la différence des signaux de sortie des deux filtres se trouve au-dessous de la valeur de seuil, constamment ou à tout le moins suffisamment longtemps.

**33.** Dispositif selon l'une des revendications 29 à 32, **caractérisé par** un dispositif (507, 508) qui examine la variation dans le temps du signal de sortie du deuxième passe- bas (403).

# Fig.1

## Fig. 2

Fig. 3

300 — START

310 — LA li ?
ja → MEM n li — 311
nein

320 — LA re ?
ja → MEM n re — 321
nein

330 — QA naA ?
ja → MEM n naA — 331
nein

340 — Alle MEMs ?
nein
ja

350 — LA li / LA re / QA naA

360 — GA:

370 — Ausg:

380 — ENDE

# Fig. 4

111a – 114a

210

401  402  409  404  405

DVNA

FILF

403  FILS  408

420  407  410

415  406

430

425

Fig. 5

Fig. 6

# Fig. 7